# EUROPÄISCHE PATENTSCHRIFT

(11) **EP 1 686 005 B1**
(45) Veröffentlichungstag und Bekanntmachung des Hinweises auf die Patenterteilung: **28.11.2007**
(21) Anmeldenummer: 05026805.1
(22) Anmeldetag: 08.12.2005
(51) Int. Cl.: B60N 3/02

(54) **Haltegriff für Fahrzeuge bzw. Verfahren zur Herstellung desselben**
Handgrip for vehicles and process for manufacturing the same
Poignée de maintien pour véhicules et procédé pour sa fabrication

(30) Priorität: 27.01.2005 DE 102005003760
(43) Veröffentlichungstag der Anmeldung: 02.08.2006
(73) Patentinhaber: HAPPICH Fahrzeug- und Industrieteile GmbH, 42285 Wuppertal (DE)
(72) Erfinder: Mertens, David, 40764 Langenfeld (DE)

(56) Entgegenhaltungen:
- DE-A1- 2 835 595
- DE-U1- 7 817 561
- US-B1- 6 473 939

## Beschreibung

Die Erfindung bezieht sich auf einen Haltegriff für Fahrzeuge, insbesondere für Großraumfahrzeuge, bestehend aus einem Griffkörper mit endseitig daran angeordneten, Durchbrüche für Befestigungsmittel, wie z. B. Befestigungsschrauben oder dgl., aufweisenden Endstücken, und aus einer sich über wesentliche Teile der Haltegrifflänge erstreckenden Einlage aus formstabilem Material mit einer umspritzten Umpolsterung aus Kunststoff-Material.

Aus dem Stand der Technik sind verschiedene Haltegriffe für Fahrzeuge, insbesondere für Großraumfahrzeuge, der gattungsgemäßen Art bekannt. Es werden bei diesen bekannten Ausführungsformen derartiger Haltegriffe diese Haltegriffe nur in einer einzigen Farbe gefertigt. Es sei dazu beispielhaft auf die Anordnung gemäß der DE 28 35 595 C2 verwiesen. Es bezieht sich diese Druckschrift auf einen Haltegriff für Fahrzeuge, bestehend aus einem Griffkörper mit beidendig daran angelenkten, mit Durchbrüchen für Befestigungsschrauben oder dgl. vorgesehenen Endstücken und aus einer sich über die gesamte Haltegrifflänge erstreckenden, in einer Umpolsterung eingebetteten Einlage aus relativ formstabilem Material. Es ist dabei gemäß einer Ausführungsform vorgesehen, dass die Einlage eine umspritzte Umpolsterung aus Kunststoff aufweist. Die Einlage selbst kann zweckmäßig als Spritzgussteil ausgebildet sein. Es ergibt sich bei diesen bekannten Ausführungsformen aufgrund der fehlenden Farbunterschiedlichkeit insbesondere der Nachteil einer schlechten Erkennbarkeit, im Weiteren ist bei diesen Ausführungsformen die Griffigkeit der Grifffläche verbesserungswürdig.

Ausgehend von diesen bekannten Haltegriffen für Fahrzeuge, insbesondere für Großraumfahrzeuge, liegt der vorliegenden Erfindung die Aufgabe zu Grunde, die bekannten Anordnungen unter Beibehaltung der bisherigen Vorteile in der Weise zu verbessern bzw. weiter zu entwickeln, dass die zuvor erwähnten Nachteile der bekannten Haltegriffe vermieden werden, wobei insbesondere die Erkennbarkeit und die Griffigkeit der Grifffläche dieser Haltegriffe deutlich verbessert werden soll. Dabei soll die gewünschte Anordnung auch einen einfachen konstruktiven Aufbau mit wenigen Bauteilen aufweisen, der einfach hergestellt werden kann.

Die Erfindung bezieht sich außerdem auf ein Verfahren zur Herstellung eines Haltegriffs für Fahrzeuge, insbesondere für Großraumfahrzeuge. Bei den bekannten Verfahren zur Herstellung derartiger Haltegriffe, insbesondere von solchen mit einem Signalstreifen, war insbesondere nachteilig, dass diese Signalstreifen in die bereits fertig umspritzte Umpolsterung in einem separaten Fertigungsschritt aufwendig und umständlich in diese eingebracht werden müssen.

Ausgehend von diesen bekannten Verfahren liegt der vorliegenden Erfindung weiterhin die Aufgabe zu Grunde, die bekannten Verfahren insbesondere zur Bildung eines Haltegriffs mit einem Griffkörper mit Signalstreifen deutlich zu vereinfachen.

Das Dokument US-B1-6473939 offenbart einen Haltegriff nach Oberbegriff des Anspruchs 1.

Die Aufgabe wird bezüglich des Haltegriffs erfindungsgemäß dadurch gelöst, dass die umspritzte Umpolsterung für die Einlage aus formstabilem Material aus einem diese Einlage umgebenden, umspritzten zähelastischen Kunststoff-Material sowie aus einem einen Teilbereich dieses elastischen Kunststoff-Materials umgebenden, ebenfalls umspritztem Schaum-Material, insbesondere Integralschaum besteht. Auf diese Weise wird erstmalig mit einfachen Mitteln die Möglichkeit geschafften, durch dieses die Einlage umgebende, umspritzte zähelastische Kunststoff-Material, das teilweise die Außenfläche des Haltegriffs bildet, eine von außen gut sichtbare Markierungsfläche wie z. B. einen Signalstreifen auszubilden, so dass sich der erfindungsgemäße Haltegriff deutlich besser erkennen lässt, im Weiteren wird durch dieses zähelastische Kunststoff-Material die Griffigkeit dieses Haltegriffs deutlich erhöht. Der erfindungsgemäße Haltegriff weist dabei auch einen einfachen konstruktiven Aufbau mit wenigen Bauteilen auf, der einfach hergestellt werden kann.

Die Aufgabe wird bezüglich des Verfahrens erfindungsgemäß dadurch gelöst, dass zur Bildung eines Haltegriffs mit einem Griffkörper mit Signalstreifen mit endseitig daran angeordneten Endstücken mit Durchbrüchen für Befestigungsmittel, wie z. B. Befestigungsschrauben oder dgl., zunächst eine sich über weite Teile der Haltegrifflänge erstreckende Einlage aus formstabilem Material mit einem zähelastischen Kunststoff-Material umspritzt wird und anschließend ein Teilbereich dieses zähelastischen Kunststoff-Materials mit Schaum-Material, insbesondere Integralschaum, umspritzt wird. Auf diese Weise wird erstmalig mit einfachen Mitteln ein Verfahren geschaffen, bei dem ein solcher Haltegriff mit Signalstreifen im Griffkörper in einfacher Weise in zwei Umspritzungsschritten gefertigt werden kann, eine aufwendige und umständliche Anbringung eines Signalstreifens in einer bereits fertig umspritzte Umpolsterung ist nicht mehr notwendig.

Bei der bevorzugten Ausführungsform der vorliegenden Erfindung ist bezüglich des Haltegriffs vorgesehen, dass das die Einlage umgebende zähelastische Kunststoff-Material durch TPE (thermoplastisches Polyesterelastomer) gebildet ist. Es ist dieses Material hinsichtlich seiner Umspritzung bezüglich der formstabilen Einlage bzw. seiner Umspritzbarkeit durch das Schaum-Material besonders gut geeignet, weitere Vorteile ergeben sich auch hinsichtlich von dessen Griffigkeit.

Nach einem weiteren Merkmal der vorliegenden Erfindung ist vorgesehen, dass das zähelastische Kunststoff-Material zur Bildung eines Signalstreifens in dem nicht von dem Schaum-Material, insbesondere Integralschaum, umgebenen Bereich andersfarbig als dieses ausgebildet ist. Auf diese Weise ist eine besonders gute Erkennbarkeit dieses Signalstreifens und damit des gesamten Haltegriffs gegeben. Dabei empfiehlt es sich, dass zur Erkennbarkeit des Signalstreifens von mehreren Seiten dieser an dem außen liegenden, stark gebogenen Randbereich des Griffkörpers des Haltegriffs ausgebildet ist. Es wird dadurch weiterhin die Erkennbarkeit des Signalstreifens und damit des Haltegriffs verbessert, diese Erkennbarkeit kann dabei weiterhin dadurch verbessert werden, indem eine leuchtende Farbe wie z. B. gelb für diesen Signalstreifen verwendet wird.

Es empfiehlt sich nach einem weiteren Merkmal der vorliegenden Erfindung, dass die Konturen des zähelastischen Kunststoff-Materials und des Schaum-Materials, insbesondere des Integralschaums, ineinander übergehend ausgebildet sind. Es ist durch diese Ausbildung der erfindungsgemäße Haltegriff besonders bedienerfreundlich ausgebildet.

Zur Verbesserung des optischen Erscheinungsbilds in fertig montiertem Zustand des erfindungsgemäßen Haltegriffs ist nach einem weiteren Merkmal der vorliegenden Erfindung vorgesehen, dass im Bereich der Endstücke des Haltegriffs Abdeckeinrichtungen, insbesondere Abdeckkappen, für die Abdeckung der Durchbrüche für die Befestigungsmittel angeordnet sind. Um zusätzlich zu der Abdeckfunktion auch einen Diebstahlschutz und einen Schutz vor Vandalismus zu erreichen, ist dabei gemäß einem weiteren Ausgestaltungsmerkmal der vorliegenden Erfindung vorgesehen, dass die Abdeckeinrichtungen, insbesondere Abdeckkappen, filmscharnierartig ausgebildet sind. Eine solche filmscharnierartig ausgebildete Abdeckkappe ist mit ihrem Unterteil fest in dem jeweiligen Endstück des Haltegriffs verankert, und kann in fertig montiertem Zustand nicht aus diesem entnommen werden.

Bezüglich des Haltegriffs ist nach einem letzten Merkmal der vorliegenden Erfindung vorgesehen, dass die Endstücke des Haltegriffs im Bereich der Auflagefläche eine umlaufende Lippe aufweisen. Es dient diese umlaufende Lippe als Spaltsichtschutz insbesondere in dem Fall, in dem eine den montierten Haltegriff festhaltende Hand diesen Haltegriff mit einer Kraft beaufschlagt.

Bezüglich des Verfahrens ist gemäß einer bevorzugten und auch letzten Ausführungsform der vorliegenden Erfindung vorgesehen, dass die formstabile Einlage in einem ersten Schritt mit TPE (thermoplastisches Polyesterelastomer) umspritzt wird. Es ist dieses Material, wie auch in Zusammenhang mit dem Haltegriff bereits erwähnt, zur Ausbildung des erfindungsgemäßen Haltegriffs sowie auch zur Durchführung des erfindungsgemäßen Verfahrens besonders gut geeignet.

Die Erfindung ist in den Figuren der Zeichnung in einem Ausführungsbeispiel dargestellt. Es zeigen:
- Fig. 1: eine schematische Unteransicht des erfindungsgemäßen Haltegriffs für Fahrzeuge, insbesondere für Großraumfahrzeuge, teilweise im Schnitt,
- Fig. 2: eine schematische Draufsicht des erfindungsgemäßen Haltegriffs gemäß dem Pfeil Fig. 2 in Fig. 1,
- Fig. 3: eine Schnittdarstellung des erfindungsgemäßen Haltegriffs gemäß der Schnittlinie III - III in Fig. 2,
- Fig. 4: eine Unteransicht des erfindungsgemäßen Haltegriffs gemäß dem Pfeil Fig. IV in Fig. 3,
- Fig.5: eine weitere Schnittansicht des erfindungsgemäßen Haltegriffs gemäß der Linie V - V in Fig. 4,
- Fig. 6: eine vergrößerte Darstellung der Schnittansicht der Einzelheit Fig. VI aus Fig. 3,
- Fig. 7: eine perspektivische, explosionsartige Darstellung der Einzelteile des erfindungsgemäßen Haltegriffs zur Veranschaulichung von dessen Herstellung.

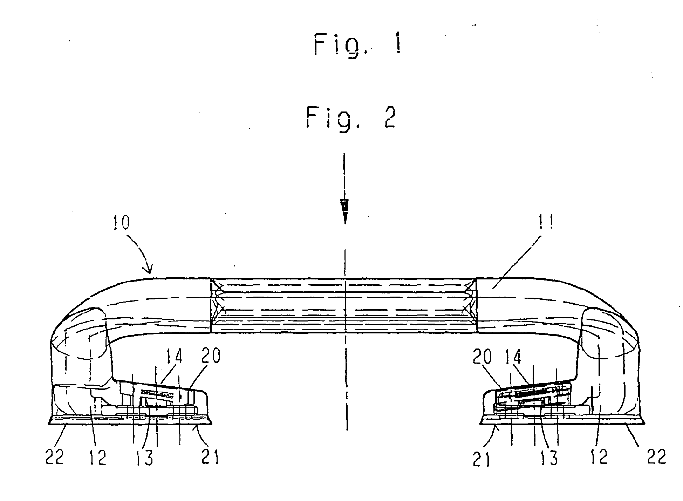

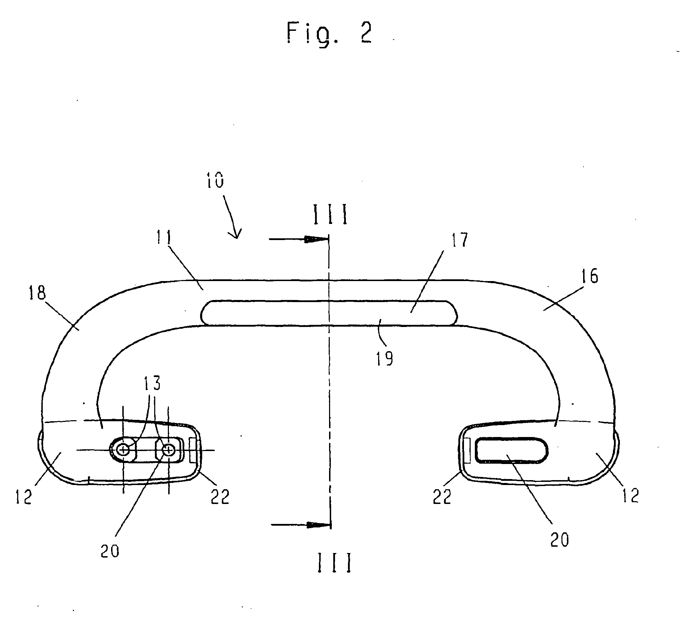

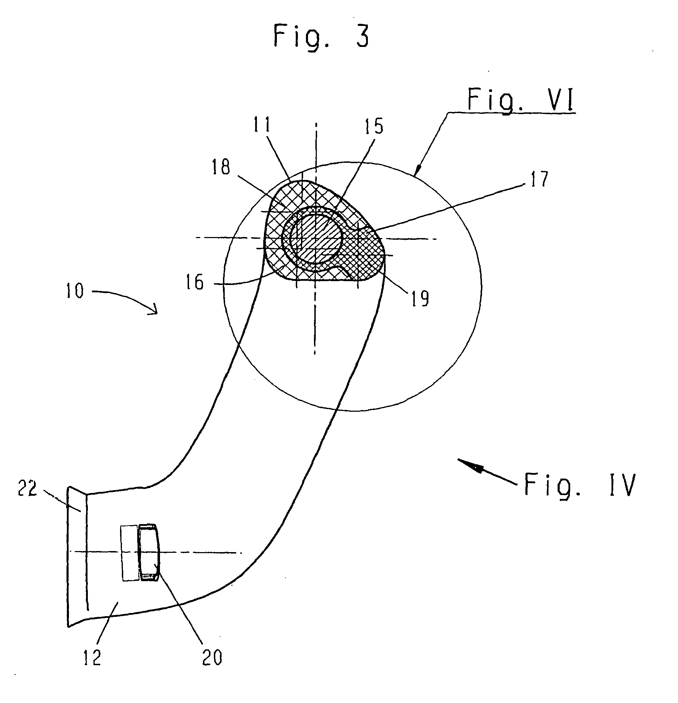

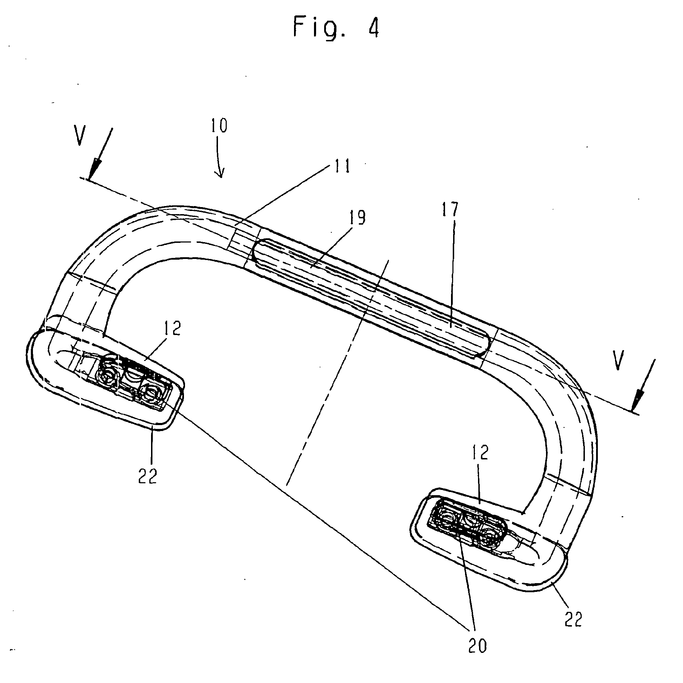

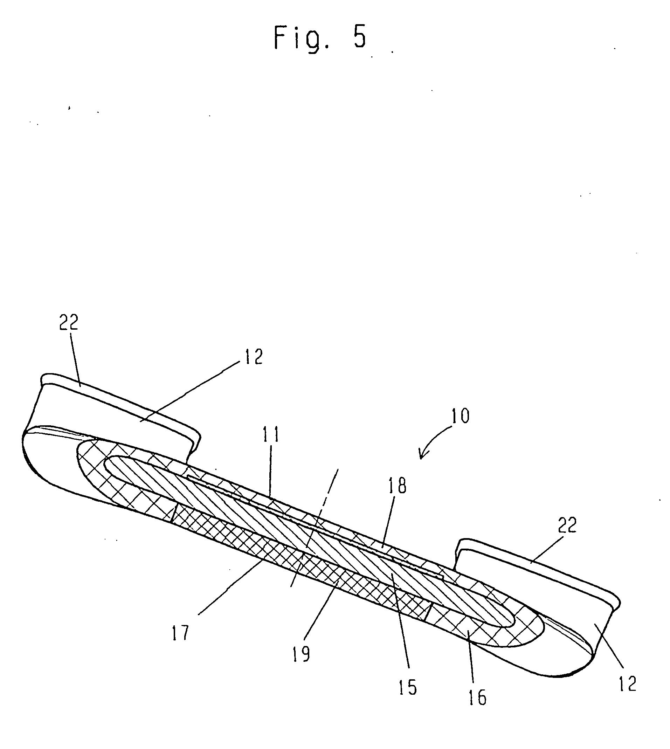

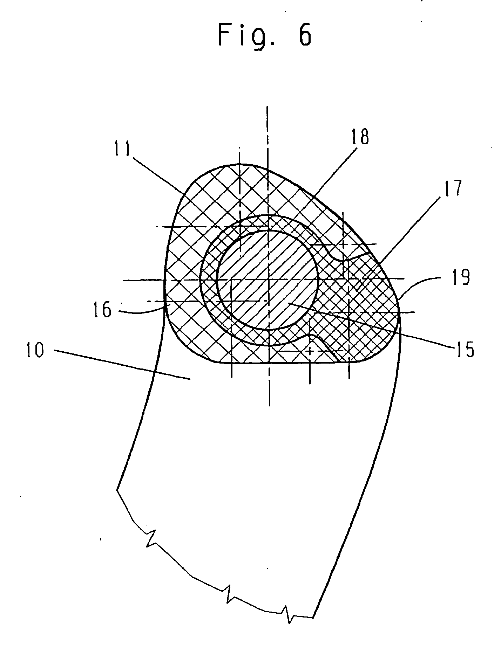

Der erfindungsgemäße Haltegriff ist generell mit 10 bezeichnet und dient für eine Verwendung in Fahrzeugen, insbesondere in Großraumfahrzeugen. Es ist dazu der erfindungsgemäße Haltegriff 10 in den Fig. 1 bis 7 der Zeichnung in verschiedenen Ansichten und Schnittdarstellungen dargestellt. Der erfindungsgemäße Haltegriff 10 besteht, siehe dazu z. B. die Fig. 1 in Verbindung mit der Fig. 2 der Zeichnung, aus einem mit 11 bezeichneten Griffkörper mit endseitig daran angeordneten Endstücken 12, die ihrerseits Durchbrüche 13 für Befestigungsmittel, wie z. B. Befestigungsschrauben 14 oder dgl., aufweisen. Über diese Befestigungsmittel kann der erfindungsgemäße Haltegriff 10 in an sich bekannter Weise an dem jeweiligen Untergrund oder Trägerelement befestigt werden. Der erfindungsgemäße Haltegriff 10 besteht außerdem, siehe dazu z. B. die Fig. 3 in Verbindung mit der Fig. 5 der Zeichnung, aus einer sich über wesentliche Teile der Haltegrifflänge erstreckenden Einlage 15 aus formstabilem Material mit einer umspritzten Umpolsterung 16 aus Kunststoff-Material, siehe dazu insbesondere zunächst die Fig. 3 der Zeichnung. Die Einlage 15 kann dabei beispielsweise aus Rundstahl bestehen. Zur Verbesserung der Erkennbarkeit und auch der Griffigkeit ist dabei bei dem Haltegriff 10 erfindungsgemäß vorgesehen, siehe dazu auch insbesondere die Fig. 6 der Zeichnung, dass die umspritzte Umpolsterung 16 für die Einlage 15 aus formstabilem Material aus einem diese Einlage 15 umgebenden, umspritzten zähelastischen Kunststoff-Material 17 sowie aus einem einen Teilbereich dieses zähelastischen Kunststoff-Materials 17 umgebenden, ebenfalls umspritzten Schaum-Material, in diesem Fall Integralschaum 18, besteht. Es ist dabei bei dem in den Fig. der Zeichnung dargestellten Ausführungsbeispiel des erfindungsgemäßen Haltegriffs 10 vorgesehen, dass das die Einlage 15 umgebende zähelastische Kunststoffmaterial 17 durch TPE (thermoplastisches Polyesterelastomer) gebildet ist. Bei dem erfindungsgemäßen Haltegriff 10 werden durch die Ausbildung des von außen teilweise sichtbaren zähelastischen Kunststoff-Materials 17 die Möglichkeiten für eine bessere Erkennbarkeit durch die Ausbildung z. B. eines Signalstreifens 19 in diesem Bereich sowie auch die Griffigkeit gegenüber den bekannten Ausführungsformen deutlich erhöht. Der erfindungsgemäße Haltegriff 10 ist dabei auch in zwei hintereinander folgenden Umspritzungsschritten einfach herstellbar.

Bei dem erfindungsgemäßen Haltegriff 10 ist weiterhin vorgesehen, siehe dazu wieder die Fig. 3 oder die Fig. 6 der Zeichnung, dass das zähelastische Kunststoff-Material 17 zur Bildung eines Signalstreifens 19, siehe auch Fig. 5, in dem nicht von dem Schaum-Material, hier Integralschaum 18, umgebenen Bereich andersfarbig als dieses ausgebildet ist. Zur Ausbildung dieses Signalstreifens 19 ist dabei insbesondere eine leuchtende Farbe wie beispielsweise gelb vorzusehen. Im Weiteren ist zur Erkennbarkeit des besagten Signalstreifens 19 von mehreren Seiten dieser an dem außen liegenden, stark gebogenen Randbereich des Griffkörpers 11 des Haltegriffs 10 ausgebildet. Dadurch ist der Signalstreifen 19 von zumindest zwei Seiten deutlich erkennbar, außerdem wird durch die besondere Griffigkeit dieses TPE-Materials die Griffigkeit des Haltegriffs 10 insgesamt deutlich erhöht.

Weiterhin ist vorgesehen, siehe dazu wieder die Fig. 6 der Zeichnung, dass die Konturen des zähelastischen Kunststoff-Materials 17 und des Schaum-Materials, hier Integralschaum 18, ineinander übergehend ausgebildet sind. Dadurch wird die Bedienerfreundlichkeit des erfindungsgemäßen Haltegriffs 10 deutlich erhöht.

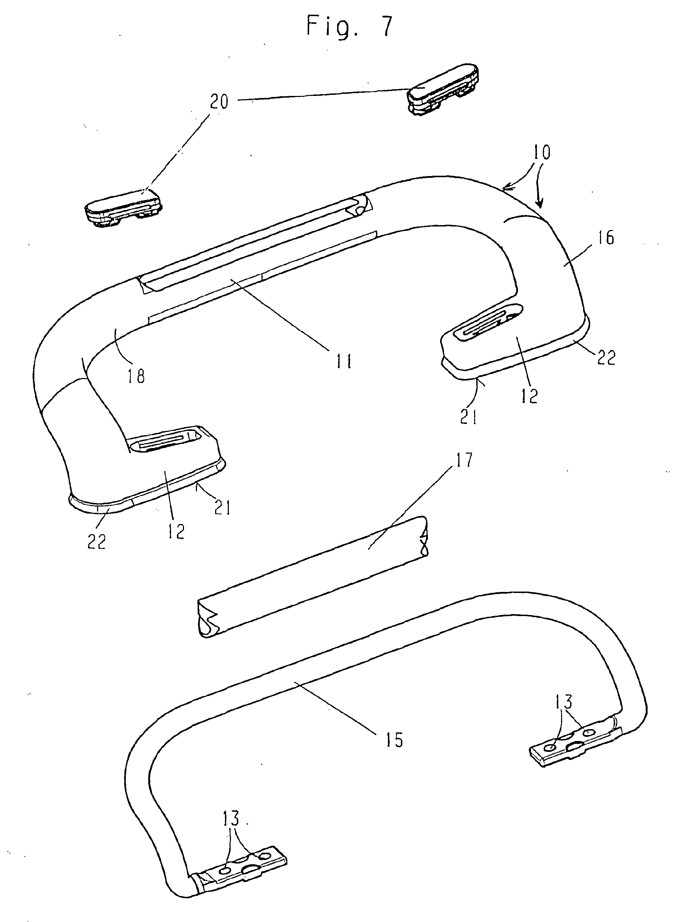

Weiterhin ist vorgesehen, siehe dazu die Fig. 2 in Verbindung mit der Fig. 7 der Zeichnung, dass im Bereich der Endstücke 12 des Haltegriffs 10 Abdeckeinrichtungen, in diesem Fall Abdeckkappen 20, für die Abdeckung der Durchbrüche 13 für die Befestigungsmittel, hier Befestigungsschrauben 14, angeordnet sind. Durch diese Abdeckung der Durchbrüche 13 für die Befestigungsschrauben 14 bzw. der Befestigungsschrauben 14 selbst durch die besagten Abdeckkappen 20 wird das äußere Erscheinungsbild des erfindungsgemäßen Haltegriffs 10 deutlich verbessert. Dabei ist hier vorgesehen, siehe wieder die Fig. 7 der Zeichnung, dass diese Abdeckeinrichtungen, hier Abdeckkappen 20, filmscharnierartig ausgebildet sind. Eine derart ausgebildete, filmscharnierartige Abdeckkappe 20 ist in fertig montiertem Zustand des Haltegriffs 10 über ihr Unterteil fest in dessen jeweiligem Endstück 12 verankert, und bietet so neben der Abdeckfunktion auch einen Diebstahlschutz und einen Schutz vor Vandalismus, da die Abdeckkappe 20 in diesem fertig montiertem Zustand des Haltegriffs 10 nicht entnommen werden kann. Bei dem erfindungsgemäßen Haltegriff 10 weisen ferner die Endstücke 12 dieses Haltegriffs 10, siehe dazu die Fig. 1, 3 oder 5 der Zeichnung, im Bereich der Auflagefläche 21 eine umlaufende Lippe 22 auf.

### Bezugszeichenliste:

- 10: Haltegriff
- 11: Griffkörper (von 10)
- 12: Endstück (von 10)
- 13: Durchbruch (in 12 für 14)
- 14: Befestigungsschraube
- 15: Einlage (in 11)
- 16: umspritzte Umpolsterung (für 15)
- 17: zähelastisches Material (um 15)
- 18: Integralschaum (um Teilbereich von 17)
- 19: Signalstreifen
- 20: Abdeckkappe
- 21: Auflagefläche (von 12)
- 22: umlaufende Lippe (an 12 bei 21)

## Patentansprüche

1. Haltegriff (10) für Fahrzeuge, insbesondere für Großraumfahrzeuge, bestehend aus einem Griffkörper (11) mit endseitig daran angeordneten, Durchbrüche (13) für Befestigungsmittel, wie z. B. Befestigungsschrauben (14) oder dgl., aufweisenden Endstücken (12), und aus einer sich über wesentliche Teile der Haltegrifflänge erstreckenden Einlage (15) aus formstabilem Material mit einer umspritzten Umpolsterung (16) aus Kunststoff-Material, **dadurch gekennzeichnet, dass** die umspritzte Umpolsterung (16) für die Einlage (15) aus formstabilem Material aus einem diese Einlage (15) vollständig umgebenden, umspritzten zähelastischen Kunststoff-Material (17) sowie aus einem einen Teilbereich dieses zähelastischen Kunststoff-Materials (17) umgebenden, ebenfalls umspritzten Schaum-Material, insbesondere Integralschaum (18), besteht, wobei das zähelastische Kunststoff-Material (17) zur Bildung eines Signalstreifens (19) in dem nicht von dem Schaum-Material, insbesondere Integralschaum (18), umgebenen Bereich andersfarbig als dieses ausgebildet ist.

2. Haltegriff nach Anspruch 1, **dadurch gekennzeichnet, dass** das die Einlage (15) umgebende zähelastische Kunststoff-Material (17) durch TPE (thermoplastisches Polyesterelastomer) gebildet ist.

3. Haltegriff nach Anspruch 1 oder 2, **dadurch gekennzeichnet, dass** zur Erkennbarkeit des Signalstreifens (19) von mehreren Seiten dieser an dem außen liegenden, stark gebogenen Randbereich des Griffkörpers (11) des Haltegriffs (10) ausgebildet ist.

4. Haltegriff nach einem der Ansprüche 1 bis 3, **dadurch gekennzeichnet, dass** die Konturen des zähelastischen Kunststoff-Materials (17) und des Schaum-Materials, insbesondere des Integralschaums (18), ineinander übergehend ausgebildet sind.

5. Haltegriff nach einem der Ansprüche 1 bis 4, **dadurch gekennzeichnet, dass** im Bereich der Endstücke (12) des Haltegriffs (10) Abdeckeinrichtungen, insbesondere Abdeckkappen (20), für die Abdeckung der Durchbrüche (13) für die Befestigungsmittel angeordnet sind.

6. Haltegriff nach Anspruch 5, **dadurch gekennzeichnet, dass** die Abdeckeinrichtungen, insbesondere Abdeckkappen (20), filmscharnierartig ausgebildet sind.

7. Haltegriff nach einem der Ansprüche 1 bis 6, **dadurch gekennzeichnet, dass** die Endstücke (12) des Haltegriffs (10) im Bereich der Auflagefläche (21) eine umlaufende Lippe (22) aufweisen.

8. Verfahren zur Herstellung eines Haltegriffs für Fahrzeuge, insbesondere für Großraumfahrzeuge, **dadurch gekennzeichnet, dass** zur Bildung eines Haltegriffs (10) mit einem Griffkörper (11) mit Signalstreifen (19) mit endseitig daran angeordneten Endstücken (12) mit Durchbrüchen (13) für Befestigungsmittel, wie z. B. Befestigungsschrauben (14) oder dgl., zunächst eine sich über weite Teile der Haltegrifflänge erstreckende Einlage (15) aus formstabilem Material mit einem zähelastischen Kunststoff-Material (17) vollständig umspritzt wird und anschließend ein Teilbereich dieses zäheelastischen Kunststoff-Materials (17) mit Schaum-Material, insbesondere Integralschaum (18), umspritzt wird, wobei das zähelastische Kunststoff-Material (17) zur Bildung des Signalstreifens (19) in dem nicht von dem Schaum-Material, insbesondere Integralschaum (18), umgebenen Bereich andersfarbig als dieses ausgebildet ist.

9. Verfahren nach Anspruch 8, **dadurch gekennzeichnet, dass** die formstabile Einlage (15) im ersten Schritt mit TPE (thermoplastisches Polyesterelastomer) umspritzt wird.

## Claims

1. Grab handle (10) for vehicles, in particular for large-volume vehicles, consisting of a handle body (11) comprising end pieces (12) arranged at the ends comprising through-holes (13) for fastening means, such as for example fastening screws (14) or the like, and an insert (15) extending over substantial parts of the grab handle length made of dimensionally stable material with overmoulded padding (16) made of plastics material, **characterized in that** the overmoulded padding (16) for the insert (15) made of dimensionally stable material consists of an overmoulded viscoelastic plastics material (17) entirely surrounding said insert (15), as well as a foam material, in particular integral foam (18), which is also overmoulded, surrounding a partial region of said viscoelastic plastics material (17), the viscoelastic plastics material (17) for forming a marker strip (19) in the region not surrounded by the foam material, in particular integral foam (18), being configured in a different colour therefrom.

2. Grab handle according to Claim 1, **characterized in that** the viscoelastic plastics material (17) surrounding the insert (15) is formed from TPE (thermoplastic polyesterelastomer).

3. Grab handle according to Claim 1 or 2, **characterized in that** for the identifiability of the marker strip (19) from a plurality of sides, said marker strip is configured on the externally located, considerably curved edge region of the grip body (11) of the grab handle (10).

4. Grab handle according to one of Claims 1 to 3, **characterized in that** the contours of the viscoelastic plastics material (17) and the foam material, in particular of the integral foam (18), are configured to merge with one another.

5. Grab handle according to one of Claims 1 to 4, **characterized in that** in the region of the end pieces (12) of the grab handle (10), covering devices, in particular covering caps (20), are arranged for covering the through-holes (13) for the fastening means.

6. Grab handle according to Claim 5, **characterized in that** the covering devices, in particular covering caps (20), are configured in the manner of a film hinge.

7. Grab handle according to one of Claims 1 to 6, **characterized in that** the end pieces (12) of the grab handle (10) comprise in the region of the bearing surface (21) a peripheral lip (22).

8. Method for producing a grab handle for vehicles, in particular for large-volume vehicles, **characterized in that** for forming a grab handle (10) with a handle body (11) with a marker strip (19) with end pieces (12) arranged at the ends, with through-holes (13) for fastening means, such as for example fastening screws (14) or the like, firstly an insert (15) extending over large parts of the grab handle length made of dimensionally stable material is completely overmoulded by a viscoelastic plastics material (17) and subsequently a partial region of said viscoelastic plastics material (17) is overmoulded by foam material, in particular integral foam (18), the viscoelastic plastics material (17) for forming the marker strip (19) in the region not surrounded by the foam material, in particular integral foam (18), being configured in a different colour therefrom.

9. Method according to Claim 8, **characterized in that**, in the first step, the dimensionally stable insert (15) is overmoulded with TPE (thermoplastic polyesterelastomer).

## Revendications

1. Poignée de maintien (10) pour véhicules, notamment pour des véhicules de grand volume, constituée d'un corps de poignée (11) avec des embouts (12) disposés au niveau des extrémités, présentant des orifices (13) pour des moyens de fixation, comme par exemple des vis de fixation (14) ou similaires, et d'un insert (15) s'étendant sur des parties majeures de la longueur de la poignée de maintien, en matériau de forme stable avec un rembourrage surmoulé (16) en matériau en plastique, **caractérisée en ce que** le rembourrage surmoulé (16) pour l'insert (15) en matériau de forme stable se compose d'un matériau en plastique viscoplastique (17) surmoulé enrobant complètement cet insert (15) ainsi que d'un matériau en mousse également surmoulé, entourant une région partielle de ce matériau en plastique viscoplastique (17), notamment une mousse intégrale (18), le matériau en plastique viscoplastique (17) étant conçu pour former une bande signalétique (19) d'une autre couleur dans la région non entourée par le matériau en mousse, notamment la mousse intégrale (18) .

2. Poignée de maintien selon la revendication 1, **caractérisée en ce que** le matériau en plastique viscoplastique (17) entourant l'insert (15) est formé par du TPE (polyester élastomère thermoplastique).

3. Poignée de maintien selon la revendication 1 ou 2, **caractérisée en ce que** pour reconnaître la bande signalétique (19) depuis plusieurs côtés, celle-ci est réalisée au niveau de la région extérieure de forte courbure du corps de poignée (11) de la poignée de maintien (10).

4. Poignée de maintien selon l'une quelconque des revendications 1 à 3, **caractérisée en ce que** les contours du matériau en plastique viscoplastique (17) et du matériau en mousse, notamment de la mousse intégrale (18), sont réalisés de manière à se prolonger l'un par l'autre.

5. Poignée de maintien selon l'une quelconque des revendications 1 à 4, **caractérisée en ce que** dans la région des embouts (12) de la poignée de maintien (10) sont disposés des dispositifs de recouvrement, notamment des chapeaux de recouvrement (20) pour recouvrir les orifices (13) pour les moyens de fixation.

6. Poignée de maintien selon la revendication 5, **caractérisée en ce que** les dispositifs de recouvrement, notamment les chapeaux de recouvrement (20) sont réalisés sous forme de charnières à film.

7. Poignée de maintien selon l'une quelconque des revendications 1 à 6, **caractérisée en ce que** les embouts (12) de la poignée de maintien (10) présentent une lèvre périphérique (22) dans la région de la surface d'appui (21).

8. Procédé de fabrication d'une poignée de maintien pour véhicules, notamment pour des véhicules de grand volume, **caractérisé en ce que** pour former une poignée de maintien (10) avec un corps de poignée (11) avec des bandes signalétiques (19) avec des embouts (12) disposés au niveau des extrémités, présentant des orifices (13) pour des moyens de fixation, comme par exemple des vis de fixation (14) ou similaires, on revêt par surmoulage d'abord complètement un insert (15) en matériau de forme stable s'étendant sur de larges parties de la longueur de la poignée de maintien avec un matériau en plastique viscoplastique (17), et en suite on revêt par surmoulage une région partielle de ce matériau en plastique viscoplastique (17) avec un matériau en mousse, en particulier une mousse intégrale (18), le matériau en plastique viscoplastique (17) étant conçu pour former la bande signalétique (19) d'une autre couleur dans la région non entourée par le matériau en mousse, notamment la mousse intégrale (18).

9. Procédé selon la revendication 8, **caractérisé en ce que** l'insert de forme stable (15) est surmoulé dans la première étape avec du TPE (polyester élastomère thermoplastique).
